# EUROPEAN PATENT APPLICATION

(11) **EP 4 807 732 A1**
(43) Date of publication of application: **16.09.2026**
(21) Application number: 24888339.9
(22) Date of filing: 23.08.2024
(51) Int. Cl.: G10K 15/04, B60L 3/00, B60L 15/20, B60R 11/02, H04R 3/00

(54) **VEHICLE MANAGEMENT SYSTEM AND ELECTRIC VEHICLE**

(30) Priority: 08.11.2023 JP 2023190589
(71) Applicant: TOYOTA JIDOSHA KABUSHIKI KAISHA, Toyota-Shi, Aichi-Ken 471-8571 (JP)
(72) Inventor: UCHIDA, Takahiro, Toyota-shi, Aichi 471-8571 (JP); ARAKAWA, Seiji, Toyota-shi, Aichi 471-8571 (JP); SAKAI, Kazuhito, Toyota-shi, Aichi 471-8571 (JP); FUKUHARA, Chie, Toyota-shi, Aichi 471-8571 (JP)
(74) Representative: Cabinet Beau de Loménie
(86) International application number: PCT/JP2024/030041
(87) International publication number: WO 2025/100037

(57) **Abstract**

A vehicle management system is applied to an electric vehicle that uses an electric motor as a power unit for running. The vehicle management system generates sound and outputs the sound through a speaker mounted on the electric vehicle. The vehicle management system acquires driving state information indicating a driving state of the electric vehicle. The vehicle management system acquires, based on the driving state information, a negative driving degree indicating a degree of dangerous driving of the electric vehicle. The vehicle management system changes the sound and/or changes choices of the sound in accordance with the negative driving degree.

## Description

### [TECHNICAL FIELD]

The present disclosure relates to an electric vehicle that uses an electric motor as a power unit for running.

### [BACKGROUND ART]

Patent Literature 1 discloses a sound control device mounted on a vehicle that can run by an electric motor. The sound control device realistically reproduces an engine sound that is generated when a gear is changed in an engine vehicle.

### [LIST OF RELATED ART]

### [Patent Literature]

Patent Literature 1: Japanese Patent Application Publication 2011-215437

### [SUMMARY]

### [Problem to be Solved by Invention]

It is desirable to suppress dangerous driving of a vehicle. In the above-mentioned Patent Literature, the dangerous driving is not taken into consideration at all.

### [Solution to Problem]

A first aspect relates to a vehicle management system applied to an electric vehicle that uses an electric motor as a power unit for running.

The vehicle management system includes one or more processors.

The one or more processors generate sound and output the sound through a speaker mounted on the electric vehicle.

The one or more processors acquire driving state information indicating a driving state of the electric vehicle.

The one or more processors acquire, based on the driving state information, a negative driving degree indicating a degree of dangerous driving of the electric vehicle.

The one or more processors change the sound and/or change choices of the sound in accordance with the negative driving degree.

A second aspect relates to an electric vehicle that uses an electric motor as a power unit for running.

The electric vehicle includes one or more processors.

The one or more processors generate sound and output the sound through a speaker mounted on the electric vehicle.

The one or more processors acquire driving state information indicating a driving state of the electric vehicle.

The one or more processors acquire, based on the driving state information, a negative driving degree indicating a degree of dangerous driving of the electric vehicle.

The one or more processors change the sound and/or change choices of the sound in accordance with the negative driving degree.

A third aspect relates to a vehicle management system applied to an electric vehicle that uses an electric motor as a power unit for running.

The electric vehicle has an imitation mode that imitates a driving characteristic of a virtual vehicle.

The vehicle management system includes one or more processors.

The one or more processors acquire driving state information indicating a driving state of the electric vehicle.

The one or more processors acquire, based on the driving state information, a negative driving degree indicating a degree of dangerous driving of the electric vehicle.

The one or more processors change choices of the virtual vehicle available in the imitation mode in accordance with the negative driving degree.

### [Effects of the Invention]

According to the first and second aspects, the sound is output through the speaker mounted on the electric vehicle. The sound is changed and/or the choices of the sound are changed in accordance with the negative driving degree that indicates the degree of dangerous driving of the electric vehicle. Due to such the change in the sound and/or the change in the choices of the sound, a driver is able to be aware of his or her dangerous driving. As a result, the driver refrains from the dangerous driving, and thus the dangerous driving is suppressed.

According to the third aspect, the electric vehicle has the imitation mode that imitates the driving characteristic of the virtual vehicle. The choices of the virtual vehicle available in the imitation mode are changed in accordance with the negative driving degree that indicates the degree of dangerous driving of the electric vehicle. Due to such the change in the choices of the virtual vehicle, a driver is able to be aware of his or her dangerous driving. As a result, the driver refrains from the dangerous driving, and thus the dangerous driving is suppressed.

### [BRIEF DESCRIPTION OF DRAWINGS]

FIG. 1 is a conceptual diagram showing an electric vehicle and a vehicle management system.
FIG. 2 is a block diagram showing an example of a basic functional configuration of a vehicle management system.
FIG. 3 is a block diagram showing another example of a basic functional configuration of a vehicle management system.
FIG. 4 is a conceptual diagram for explaining an overview of sound management that takes dangerous driving into consideration.
FIG. 5 is a block diagram showing an example of a functional configuration of a vehicle management system.
FIG. 6 is a conceptual diagram for explaining various examples of criteria for a negative driving degree.
FIG. 7 is a block diagram showing an example of a functional configuration of an engine sound generation unit.
FIG. 8 is a block diagram showing another example of a functional configuration of a vehicle management system.
FIG. 9 is a block diagram showing yet another example of a functional configuration of a vehicle management system.
FIG. 10 is a block diagram showing an in-vehicle device and a management server.
FIG. 11 is a block diagram for explaining a first example of an operation embodiment of a vehicle management system.
FIG. 12 is a block diagram for explaining a second example of an operation embodiment of a vehicle management system.
FIG. 13 is a block diagram for explaining a third example of an operation embodiment of a vehicle management system.
FIG. 14 is a block diagram for explaining a fourth example of an operation embodiment of a vehicle management system.
FIG. 15 is a block diagram showing a first configuration example of a power control system of an electric vehicle.
FIG. 16 is a diagram showing examples of an engine model, a clutch model, and a transmission model that constitute an MT vehicle model.
FIG. 17 is a diagram showing torque characteristics of an electric motor achieved by motor control using an MT vehicle model.
FIG. 18 is a block diagram showing a second configuration example of a power control system of an electric vehicle.
FIG. 19 is a block diagram showing yet another example of a functional configuration of a vehicle management system.

### [DESCRIPTION OF EMBODIMENTS]

Embodiments of the present disclosure will be described with reference to the accompanying drawings.

### 1. ELECTRIC VEHICLE AND VEHICLE MANAGEMENT SYSTEM

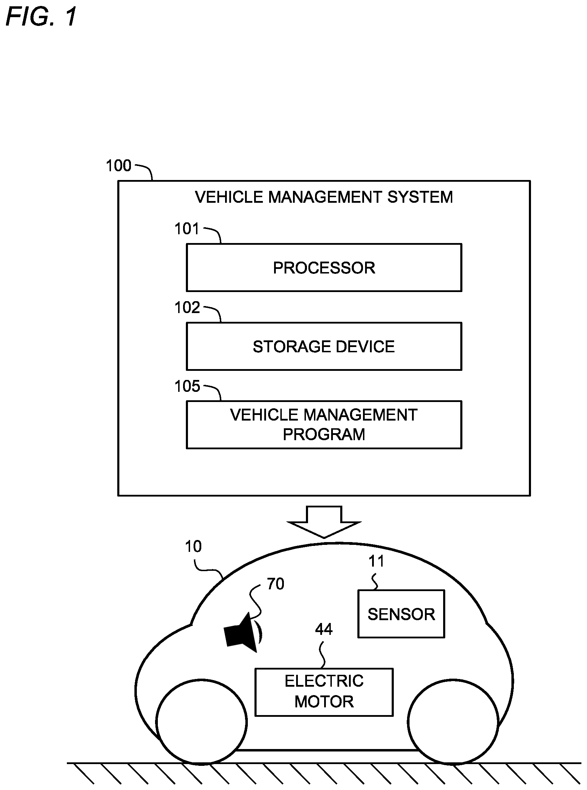

FIG. 1 is a conceptual diagram showing an electric vehicle 10 and a vehicle management system 100 according to the present embodiment. The electric vehicle 10 is equipped with an electric motor 44. The electric motor 44 is exemplified by a brushless DC motor or a three-phase AC synchronous motor. The electric vehicle 10 uses the electric motor 44 as a power unit for running.

Moreover, the electric vehicle 10 includes a variety of sensors 11. The variety of sensors 11 detect a driving state of the electric vehicle 10. Examples of the variety of sensors 11 include an accelerator position sensor, a brake position sensor, a steering angle sensor, a steering torque sensor, a wheel speed sensor, an acceleration sensor, a rotational speed sensor, a position sensor, a recognition sensor, and the like. The accelerator position sensor detects an amount of operation of an accelerator pedal. The brake position sensor detects an amount of operation of a brake pedal. The steering angle sensor detects a steering angle of a steering wheel. The steering torque sensor detects a steering torque of the steering wheel. The wheel speed sensor detects a rotation speed of a wheel of the electric vehicle 10. The acceleration sensor detects a lateral acceleration and a longitudinal acceleration of the electric vehicle 10. The rotational speed sensor detects a rotational speed of the electric motor 44. The position sensor detects a position of the electric vehicle 10. An example of the position sensor is a GNSS (Global Navigation Satellite System) sensor. The recognition sensor is a sensor for recognizing (detecting) a situation around the electric vehicle 10. Examples of the recognition sensor include a camera, a LIDAR (Light Detection And Ranging), a radar, and the like.

Furthermore, the electric vehicle 10 is equipped with one or more speakers 70. For example, the speaker 70 is an interior speaker that outputs sound to the interior of the electric vehicle 10. As another example, the speaker 70 may be an exterior speaker that outputs sound to the outside the electric vehicle 10. The electric vehicle 10 may be equipped with both the interior speaker and the exterior speaker.

The vehicle management system 100 is applied to such the electric vehicle 10 and manages the electric vehicle 10. The entire vehicle management system 100 may be installed on the electric vehicle 10. As another example, at least a part of the vehicle management system 100 may be included in a management server outside the electric vehicle 10. In that case, the vehicle management system 100 may remotely manage the electric vehicle 10. As yet another example, the vehicle management system 100 may be distributed to the electric vehicle 10 and the management server.

When generalized, the vehicle management system 100 includes one or more processors 101 (hereinafter simply referred to as a processor 101) and one or more storage devices 102 (hereinafter simply referred to as a storage device 102). The processor 101 executes a variety of processing. Examples of the processor 101 include a general-purpose processor, a special-purpose processor, a central processing unit (CPU), a graphics processing unit (GPU), an application-specific integrated circuit (ASIC), a field-programmable gate array (FPGA), an integrated circuit, a conventional circuit, and/or a combination thereof. The processor 101 may also be referred to as circuitry or processing circuitry. The circuitry is a hardware that is programmed to implement the described functions, or a hardware that performs the functions. The storage device 102 stores a variety of information. Examples of the storage device 102 include a volatile memory, a non-volatile memory, a hard disk drive (HDD), a solid state drive (SSD), and the like. The functions of the vehicle management system 100 is realized by a cooperation of the processor 101 and the storage device 102.

One or more vehicle management programs 105 (hereinafter simply referred to as a vehicle management program 105 ) are computer programs executed by the processor 101. The functions of the vehicle management system 100 may be realized by a cooperation of the processor 101 executing the vehicle management program 105 and the storage device 102. The vehicle management program 105 is stored in the storage device 102. Alternatively, the vehicle management program 105 may be recorded on a non-transitory computer-readable recording medium.

For example, the vehicle management system 100 has a function as a sound management system that manages a sound related to the electric vehicle 10. In particular, the vehicle management system 100 generates and manages a sound output from the speaker 70 mounted on the electric vehicle 10. Furthermore, the vehicle management system 100 outputs the generated sound through the speaker 70 mounted on the electric vehicle 10.

For example, the vehicle management system 100 generates a "pseudo engine sound" that imitates an engine sound of an engine vehicle. Then, the vehicle management system 100 outputs the pseudo engine sound through the speaker 70 mounted on the electric vehicle 10. It should be noted that the engine vehicle is a vehicle that is equipped with an engine (internal combustion engine) and uses the engine as a power unit for running.

The sound output from the speaker 70 is not limited to the pseudo engine sound. For example, the sound may be a pseudo driving sound that imitates a driving sound of a moving body (e.g., a train, an airplane, and the like) other than an automobile. As another example, the sound may be a navigation voice. As still another example, the sound may be music.

In the following description, as an example of the sound output from the speaker 70, the "pseudo engine sound" will be considered. However, the present disclosure can be similarly applied to other sounds. When generalizing, the terms "pseudo engine sound" and "engine sound" in the following description shall be deemed to be replaced with "sound."

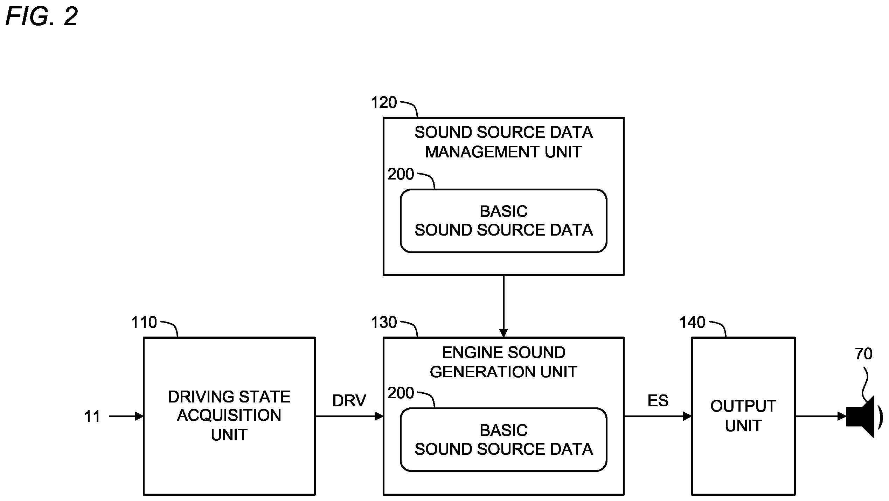

FIG. 2 is a block diagram showing an example of a basic functional configuration of the vehicle management system 100. The vehicle management system 100 includes, as functional blocks, a driving state acquisition unit 110, a sound source data management unit 120, an engine sound generation unit 130, and an output unit 140. These functional blocks may be realized by a cooperation of the processor 101 executing the vehicle management program 105 and the storage device 102.

The driving state acquisition unit 110 acquires driving state information DRV indicating a driving state of the electric vehicle 10. The driving state information DRV includes information on a driving operation performed by a driver, information on a travel state of the electric vehicle 10, information on a situation around the electric vehicle 10, and the like. Typically, the driving state information DRV includes sensor detection information detected by the sensors 11 mounted on the electric vehicle 10. For example, the driving state information DRV includes the operation amount of the accelerator pedal (i.e., accelerator opening), the operation amount of the brake pedal (i.e., brake opening), the steering angle, the steering speed, the steering torque, the wheel speed, the vehicle speed, the longitudinal acceleration, the lateral acceleration, the rotation speed of the electric motor 44, and the like. The driving state information DRV may include the position of the electric vehicle 10. The driving state information DRV may include the situation around the electric vehicle 10 that is recognized (detected) by the recognition sensor.

In addition, the driving state information DRV includes a virtual engine rotation speed Ne. Here, it is assumed that the electric vehicle 10 uses a virtual engine as a power unit for running. The virtual engine rotation speed Ne is a rotation speed of the virtual engine when it is assumed that the electric vehicle 10 is driven by the virtual engine. For example, the driving state acquisition unit 110 may calculate the virtual engine rotation speed Ne so as to increase as the wheel speed increases. When the electric vehicle 10 has a manual mode (MT mode) to be described later, the driving state acquisition unit 110 may calculate the virtual engine rotation speed Ne in the manual mode based on the wheel speed, an overall reduction ratio, and a slip rate of a virtual clutch. A method for calculating the virtual engine rotation speed Ne in the manual mode will be described later in detail.

The sound source data management unit 120 stores and manages basic sound source data 200 used to generate a pseudo engine sound. The sound source data management unit 120 is mainly realized by the one or more storage devices 102. Typically, the basic sound source data 200 includes a plurality of types of sound source data. The plurality of types of sound source data include, for example, sound source data of sounds caused by engine combustion (for low rotation speed, medium rotation speed, and high rotation speed), sound source data of sounds caused by a drive-train such as gears (for low rotation speed, medium rotation speed, and high rotation speed), sound source data of noise sounds, sound source data of event sounds (e.g., scraping sounds, engine stalling sound), and the like. Each sound source data is generated in advance through a simulation and the like based on an engine model and a vehicle model of the engine vehicle. It is possible to flexibly adjust each sound source data. That is, it is possible to flexibly adjust at least one of a sound pressure and a frequency of the sound indicated by the sound source data.

The engine sound generation unit 130 (engine sound simulator) is a simulator that generates a pseudo engine sound. The engine sound generation unit 130 acquires at least a part of the driving state information DRV from the driving state information acquiring unit 110. In particular, the engine sound generation unit 130 acquires information on the virtual engine rotation speed Ne and the vehicle speed from the driving state information acquiring unit 110. Furthermore, the engine sound generation unit 130 reads the basic sound source data 200 from the sound source data management unit 120. The engine sound generation unit 130 then generates the pseudo engine sound according to the driving state (specifically, the virtual engine rotation speed Ne and the vehicle speed) of the electric vehicle 10 by combining one or more sound source data included in the basic sound source data 200. An engine sound data ES is data indicating the generated pseudo engine sound.

It should be noted that the generation of the pseudo engine sound is a well-known technique, and is not particularly limited in the present embodiment. For example, the pseudo engine sound may be generated by a well-known engine sound simulator used in games and the like. The method may be such that a map of the virtual engine rotation speed Ne vs. frequency and a map of a virtual engine torque vs. sound pressure are prepared in advance, the frequency of the pseudo engine sound is increased or decreased in proportion to the virtual engine rotation speed Ne, and the sound pressure is increased or decreased in proportion to the virtual engine torque.

The output unit 140 receives the engine sound data ES generated by the engine sound generation unit 130. Then, the output unit 140 outputs the pseudo engine sound through the speaker 70 based on the engine sound data ES.

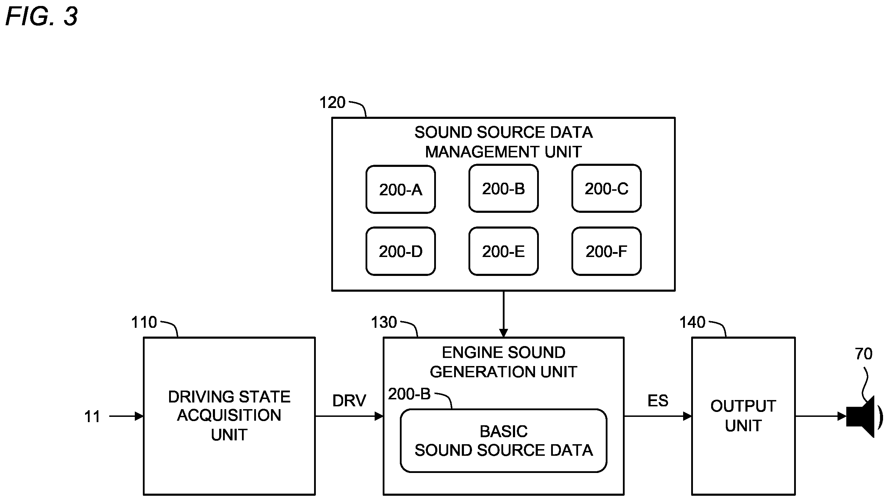

FIG. 3 is a block diagram showing another example of a basic functional configuration of the vehicle management system 100. In the example shown in FIG. 3, the sound source data management unit 120 stores and manages a plurality of types of basic sound source data 200 (200-A, 200-B, 200-C ...) associated with a plurality of vehicle types (A, B, C ...). That is, the sound source data management unit 120 stores and manages the basic sound source data 200 for each vehicle type. Each basic sound source data 200 is generated in advance based on an engine model and a vehicle model of the corresponding vehicle type. The driver may specify his or her preferred vehicle type from among the plurality of vehicle types. In this case, the engine sound generation unit 130 acquires one of the plurality of types of basic sound source data 200 that is associated with the vehicle type specified by the driver. The engine sound generation unit 130 then generates the pseudo engine sound by using the acquired basic sound source data 200 (for example, the basic sound source data 200-B associated with the vehicle type B). This allows the driver to feel as if he or she is driving the preferred vehicle type.

When generalizing the example shown in FIG. 3, it can be said that there are a plurality of choices of sound for the target of imitation. For example, the plurality of choices include respective pseudo engine sounds of a plurality of vehicle types. As another example, the plurality of choices may include respective pseudo driving sounds of a plurality of types of virtual moving bodies (e.g., vehicle, train, and airplane). In either case, the driver can select his or her preferred sound from the plurality of choices.

### 2. SOUND MANAGEMENT CONSIDERING DANGEROUS DRIVING

### 2-1. Overview

Dangerous driving is not preferable from view points of safety and traffic flow. In view of the above, the present embodiment proposes a technique that can suppress the dangerous driving.

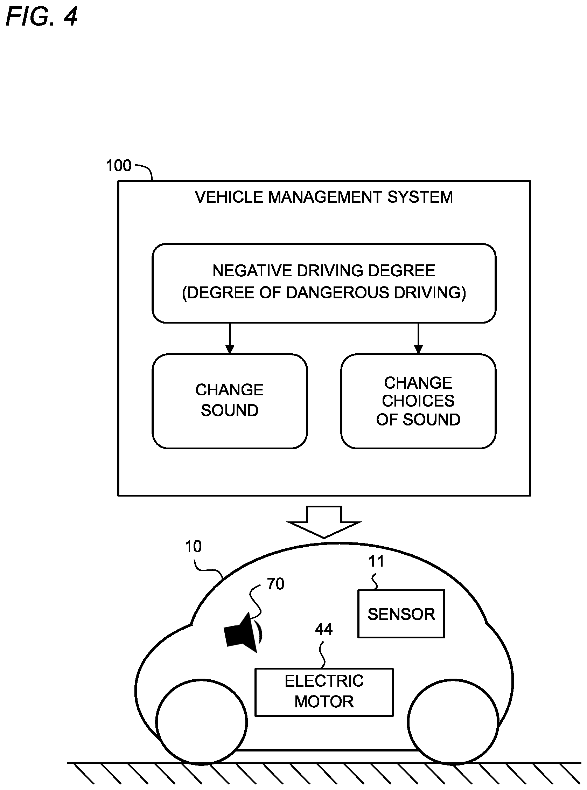

FIG. 4 is conceptual diagram for explaining an overview of sound management that takes the dangerous driving into consideration. According to the present embodiment, a "negative driving degree NEG" which indicates a degree of the dangerous driving of the electric vehicle 10 is used. The vehicle management system 100 is able to acquire the negative driving degree NEG based on the above-described driving state information DRV. Concrete examples of acquiring the negative driving degree NEG will be described later.

The vehicle management system 100 then changes the pseudo engine sound output from the speaker 70 in accordance with the negative driving degree NEG. For example, the vehicle management system 100 decreases audibility of the pseudo engine sound as the negative driving degree NEG becomes higher. As another example, the vehicle management system 100 may increase a noise component included in the pseudo engine sound as the negative driving degree NEG becomes higher. As another example, the vehicle management system 100 may increase an unnecessary sound component included in the pseudo engine sound as the negative driving degree NEG becomes higher. As yet another example, the vehicle management system 100 may increase "muffled sound" of the pseudo engine sound as the negative driving degree NEG becomes higher. As yet another example, the vehicle management system 100 may decrease a sound quality of the pseudo engine sound as the negative driving degree NEG becomes higher. When the pseudo engine sound is changed in accordance with the negative driving degree NEG, the pseudo engine sound may be changed from a default sound. Here, the default sound is a normal sound when the negative driving degree NEG is not taken into consideration. As yet another example, the vehicle management system 100 may mute the pseudo engine sound or increase a sound pressure of the pseudo engine sound when the negative driving degree NEG exceeds a threshold.

As another example, the vehicle management system 100 may change choices of the pseudo engine sound in accordance with the negative driving degree NEG (see FIG. 3). For example, the vehicle management system 100 decreases the choices of the pseudo engine sound as the negative driving degree NEG becomes higher. When the choices of the pseudo engine sound choices are changed in accordance with the negative driving degree NEG, the choices of the pseudo engine sound may be changed from default choices. Here, the default choices are normal choices when the negative driving degree NEG is not taken into consideration.

As yet another example, the vehicle management system 100 may change the pseudo engine sound and change the choices of the pseudo engine sound in accordance with the negative driving degree NEG.

As described above, according to the present embodiment, the pseudo engine sound is changed and/or the choices of the pseudo engine sound are changed in accordance with the negative driving degree NEG that indicates the degree of the dangerous driving. Due to such the change in the pseudo engine sound and/or the change in the choices of the pseudo engine sound, a driver is able to be aware of his or her dangerous driving. As a result, the driver refrains from the dangerous driving, and thus the dangerous driving is suppressed. The suppression of the dangerous driving is also preferable for the safety and the traffic flow.

As the negative driving degree NEG becomes higher, the audibility of the pseudo engine sound may be decreased. As the negative driving degree NEG becomes higher, the noise component or the unnecessary sound component included in the pseudo engine sound may be increased. As the negative driving degree NEG becomes higher, the "muffled sound" of the pseudo engine sound may be increased. As the negative driving degree NEG becomes higher, the sound quality of the pseudo engine sound may be decreased. When the negative driving degree NEG exceeds the threshold, the pseudo engine sound may be muted as a penalty to the driver. These serve as strong incentives to avoid the dangerous driving for the driver who wants to enjoy the pseudo engine sound. As a result, the dangerous driving is further suppressed.

As the negative driving degree NEG becomes higher, the choices of the pseudo engine sound may be decreased. This also serves as a strong incentive to avoid the dangerous driving for the driver who wants to enjoy the pseudo engine sound. As a result, the dangerous driving is further suppressed.

Hereinafter, concrete examples of the negative driving degree NEG and the sound management based on it will be described in detail.

### 2-2. Concrete Examples of Negative Driving

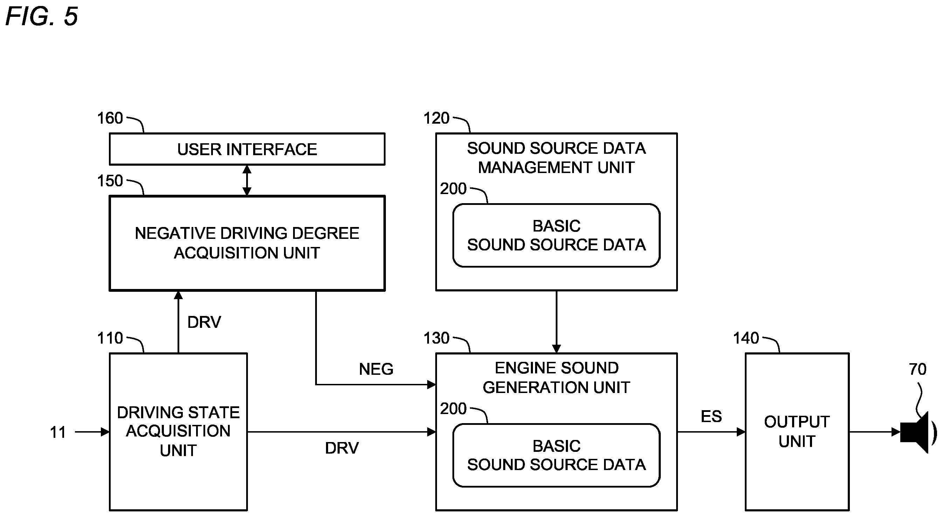

FIG. 5 is a block diagram showing an example of a functional configuration of the vehicle management system 100 according to the present embodiment. The vehicle management system 100 further includes a negative driving degree acquisition unit 150 in addition to the functional blocks shown in FIG. 2. These functional blocks may be realized by a cooperation of the processor 101 executing the vehicle management program 105 and the storage device 102.

As described above, the driving state acquisition unit 110 acquires the driving state information DRV that indicates the driving state of the electric vehicle 10. The driving state information DRV includes information on the driving operation performed by the driver, information on the travel state of the electric vehicle 10, information on the situation around the electric vehicle 10, and the like. The negative driving degree acquisition unit 150 receives the driving state information DRV from the driving state acquisition unit 110. Then, based on the driving state information DRV, the negative driving degree acquisition unit 150 acquires the negative driving degree NEG indicating the degree of the dangerous driving of the electric vehicle 10.

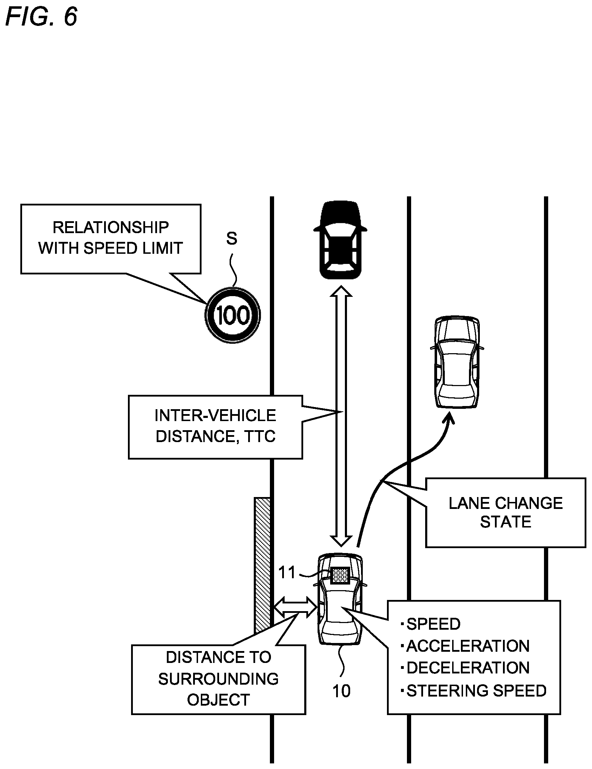

FIG. 6 is a conceptual diagram for explaining various examples of criteria for the negative driving degree NEG. The negative driving degree NEG is acquired based on at least one of the criteria shown in FIG. 6.

### 2-2-1. Relationship with speed limit

Exceeding a speed limit means the dangerous driving. Therefore, the negative driving degree acquisition unit 150 may acquire the negative driving degree NEG based on presence or absence of overspeed.

The speed limit of a road on which the electric vehicle 10 is traveling can be obtained, for example, from a speed limit sign S installed on that road. The camera mounted on the electric vehicle 10 is used for recognizing the speed limit sign S. The driving state acquisition unit 110 recognizes the speed limit sign S by analyzing an image captured by the camera. Furthermore, the driving state acquisition unit 110 recognizes a number written on the speed limit sign S based on the image of the recognized speed limit sign S. That is, the driving state acquisition unit 110 acquires information on the speed limit indicated by the speed limit sign S. Typically, the driving state acquisition unit 110 recognizes the speed limit sign S and the speed limit from the image by utilizing image recognition AI (Artificial Intelligence). The image recognition AI is created in advance through a learning method such as deep learning.

As another example, when information on the speed limit is registered in map information, the driving state acquisition unit 110 may acquire the information on the speed limit based on a current position of the electric vehicle 10 and the map information. The current position of the electric vehicle 10 is acquired by the position sensor. The map information is stored in advance in the storage device 102.

Moreover, the driving state acquisition unit 110 acquires a speed of the electric vehicle 10 from the wheel speed sensor. Alternatively, the driving state acquisition unit 110 may calculate the speed based on a change in the position of the electric vehicle 10.

The driving state acquisition unit 110 determines presence or absence of overspeed based on the speed of the electric vehicle 10 and the speed limit. In this case, the driving state information DRV includes presence or absence of overspeed.

The negative driving degree acquisition unit 150 acquires (calculates) the negative driving degree NEG based on presence or absence of overspeed. More specifically, a negative time is a time at which the overspeed occurs, that is, a time at which the speed exceeds the speed limit. A total negative time is a sum of all negative times. A negative ratio is a ratio of the negative times to a certain period of time. A negative frequency is a frequency of occurrence of the overspeed in a certain period of time. A negative parameter is the total negative time or the negative ratio or the negative frequency or a combination of two or more thereof. The negative driving degree acquisition unit 150 increases the negative driving degree NEG as the negative parameter increases. Here, the negative driving degree NEG may increase continuously or may increase stepwise. A map of the relationship between the negative parameter and the negative driving degree NEG may be given.

### 2-2-2. Acceleration and deceleration

Sudden acceleration means the dangerous driving. Therefore, the negative driving degree acquisition unit 150 may acquire the negative driving degree NEG based on an acceleration of the electric vehicle 10.

The driving state acquisition unit 110 acquires the acceleration of the electric vehicle 10 from the acceleration sensor. The driving state information DRV includes the acceleration of the electric vehicle 10.

The negative driving degree acquisition unit 150 acquires (calculates) the negative driving degree NEG based on the acceleration. More specifically, a negative time is a time at which the acceleration is equal to or higher than a threshold. A total negative time is a sum of all negative times. A negative ratio is a ratio of the negative times to a certain period of time. A negative frequency is a frequency with which the acceleration becomes equal to or higher than the threshold in a certain period of time. A negative parameter is the total negative time or the negative ratio or the negative frequency or a combination of two or more thereof. The negative driving degree acquisition unit 150 increases the negative driving degree NEG as the negative parameter increases. Here, the negative driving degree NEG may increase continuously or may increase stepwise. A map of the relationship between the negative parameter and the negative driving degree NEG may be given.

Sudden deceleration also means the dangerous driving. Therefore, the negative driving degree acquisition unit 150 may acquire the negative driving degree NEG based on a deceleration of the electric vehicle 10. The method of acquiring the negative driving degree NEG in this case is similar to that in the case of acceleration described above, and "acceleration" in the above description is replaced with "deceleration (absolute value)."

### 2-2-3. Steering speed

Sudden steering means the dangerous driving. Therefore, the negative driving degree acquisition unit 150 may acquire the negative driving degree NEG based on a steering speed of a steering wheel of the electric vehicle 10.

The driving state acquisition unit 110 calculates the steering speed from the steering angle detected by the steering angle sensor. The driving state information DRV includes the steering speed.

The negative driving degree acquisition unit 150 acquires (calculates) the negative driving degree NEG based on the steering speed. More specifically, a negative time is a time at which the steering speed is equal to or higher than a threshold. A total negative time is a sum of all negative times. A negative ratio is a ratio of the negative times to a certain period of time. A negative frequency is a frequency with which the steering speed becomes equal to or higher than the threshold in a certain period of time. A negative parameter is the total negative time or the negative ratio or the negative frequency or a combination of two or more thereof. The negative driving degree acquisition unit 150 increases the negative driving degree NEG as the negative parameter increases. Here, the negative driving degree NEG may increase continuously or may increase stepwise. A map of the relationship between the negative parameter and the negative driving degree NEG may be given.

### 2-2-4. Inter-vehicle distance, TTC

Not keeping a sufficient inter-vehicle distance with a preceding vehicle means the dangerous driving. Therefore, the negative driving degree acquisition unit 150 may acquire the negative driving degree NEG based on the inter-vehicle distance with the preceding vehicle.

The driving state acquisition unit 110 uses the recognition sensor to acquire surrounding situation information indicating a situation around the electric vehicle 10. Examples of the recognition sensor include a camera, a LIDAR, a radar, and the like. For example, the surrounding situation information includes an image captured by the camera. As another example, the surrounding situation information may include point cloud information acquired by the LIDAR. The surrounding situation information further includes object information regarding an object around the electric vehicle 10. Examples of the object around the electric vehicle 10 include a pedestrian, a bicycle, another vehicle (e.g., a preceding vehicle, a following vehicle, an adjacent vehicle, a parked vehicle), a roadside structure (e.g., a curb, a guardrail, a wall), a white line, a sign, a traffic light, and the like. The object information indicates a relative position and a relative speed of the object with respect to the electric vehicle 10. For example, analyzing the image captured by the camera makes it possible to identify an object and calculate the relative position of the object. It is also possible to identify an object and acquire the relative position and the relative speed of the object based on the point cloud information acquired by the LIDAR. The driving state information DRV includes the object information. A relative distance to the preceding vehicle corresponds to the inter-vehicle distance.

The negative driving degree acquisition unit 150 acquires (calculates) the negative driving degree NEG based on the inter-vehicle distance with the preceding vehicle. More specifically, a negative time is a time at which the inter-vehicle distance is less than a threshold. The threshold here may be a function of the speed of the electric vehicle 10. That is, the threshold may increase as the speed becomes higher. A total negative time is a sum of all negative times. A negative ratio is a ratio of the negative times to a certain period of time. A negative frequency is a frequency with which the inter-vehicle distance becomes less than the threshold in a certain period of time. A negative parameter is the total negative time or the negative ratio or the negative frequency or a combination of two or more thereof. The negative driving degree acquisition unit 150 increases the negative driving degree NEG as the negative parameter increases. Here, the negative driving degree NEG may increase continuously or may increase stepwise. A map of the relationship between the negative parameter and the negative driving degree NEG may be given.

Not having a sufficient TTC (Time-To-Collision) with the preceding vehicle also means the dangerous driving. The TTC is calculated based on the inter-vehicle distance and the speed of the electric vehicle 10. The negative driving degree acquisition unit 150 may acquire the negative driving degree NEG based on the TTC. The method of acquiring the negative driving degree NEG in this case is similar to that in the case of the inter-vehicle distance described above, and "inter-vehicle distance" in the above description is replaced with "TTC". The threshold may be a predetermined threshold that is independent of the speed.

### 2-2-5. Distance to surrounding object

Not having a sufficient distance (margin) to a surrounding object around the electric vehicle 10 means the dangerous driving. Examples of surrounding object include a pedestrian, a bicycle, an adjacent vehicle, a parked vehicle, a roadside structure (e.g., a curb, a guardrail, a wall), and the like. Therefore, the negative driving degree acquisition unit 150 may acquire the negative driving degree NEG based on the distance to the surrounding object.

As described above, the driving state information DRV includes the object information regarding the surrounding object around the electric vehicle 10. The object information includes the distance to the surrounding object.

The negative driving degree acquisition unit 150 acquires (calculates) the negative driving degree NEG based on the distance to the surrounding object. More specifically, a negative time is a time at which the distance to the surrounding object is less than a threshold. The threshold here may be a function of the speed of the electric vehicle 10. That is, the threshold may increase as the speed becomes higher. A total negative time is a sum of all negative times. A negative ratio is a ratio of the negative times to a certain period of time. A negative frequency is a frequency with which the distance to the surrounding object becomes less than the threshold in a certain period of time. A negative parameter is the total negative time or the negative ratio or the negative frequency or a combination of two or more thereof. The negative driving degree acquisition unit 150 increases the negative driving degree NEG as the negative parameter increases. Here, the negative driving degree NEG may increase continuously or may increase stepwise. A map of the relationship between the negative parameter and the negative driving degree NEG may be given.

### 2-2-6. State of lane change

A frequency of lane changes being high mean the dangerous driving. In addition, making a lane change in a lane change prohibited zone also means the dangerous driving. Therefore, the negative driving degree acquisition unit 150 may acquire the negative driving degree NEG based on a state of the lane change.

The driving state acquisition unit 110 detects a driver's active steering operation based on a result of detection by the steering sensor and/or the steering torque sensor. Moreover, the driving state acquisition unit 110 recognizes a white line around the electric vehicle 10 and its type based on the image captured by the camera. The driving state acquisition unit 110 is able to recognize occurrence of a lane change based on the result of detection of the driver's steering operation and the result of recognition of the white line. When a lane change occurs, the driving state acquisition unit 110 is able to determine, based on the type of the white line, whether or not the lane change is made in a lane change prohibited zone.

As another example, when lane information is registered in the map information, the driving state acquisition unit 110 is able to recognize occurrence of a lane change based on the position of the electric vehicle 10 and the map information. When lane change permitted zones and lane change prohibited zones are registered in the map information, the driving state acquisition unit 110 is able to determine whether or not the lane change is made in a lane change prohibited zone.

The driving state information DRV includes the state of the lane change. The state of the lane change may include a frequency of lane changes in a certain period of time. The state of the lane change may include whether or not the lane change is made in the lane change prohibited zone.

The negative driving degree acquisition unit 150 acquires (calculates) the negative driving degree NEG based on the state of the lane change. For example, the negative driving degree acquisition unit 150 increases the negative driving degree NEG as the frequency of lane changes is higher. Here, the negative driving degree NEG may increase continuously or may increase stepwise. A map of the relationship between the frequency of lane changes and the negative driving degree NEG may be given.

As another example, the negative driving degree acquisition unit 150 may increase the negative driving degree NEG when the lane change is made in the lane change prohibited zone. Conversely, the negative driving degree acquisition unit 150 may decrease the negative driving degree NEG when the lane change is made in the lane change permitted zone.

### 2-2-7. Combination

A combination of two or more of the above-described subsections 2-2-1 to 2-2-6 is also possible. That is, the negative driving degree acquisition unit 150 may acquire a final negative driving degree NEG by integrating a plurality of negative driving degrees NEG respectively acquired based on a plurality of criteria.

### 2-3. Sound Management According to Negative Driving Degree

In the example shown in FIG. 5, the negative driving degree acquisition unit 150 outputs the negative driving degree NEG to the engine sound generation unit 130. The engine sound generation unit 130 changes the pseudo engine sound to generate in accordance with the negative driving degree NEG.

For example, the engine sound generation unit 130 decreases the audibility of the pseudo engine sound as the negative driving degree NEG becomes higher. For example, the engine sound generation unit 130 increases a noise component included in the pseudo engine sound as the negative driving degree NEG becomes higher, thereby decreasing the audibility. As another example, the engine sound generation unit 130 may increase unpleasant sound (e.g., high-pitched squeal, scraping sound) included in the pseudo engine sound as the negative driving degree NEG becomes higher, thereby decreasing the audibility. As yet another example, the engine sound generation unit 130 may increase an unnecessary sound component (sound unrelated to the engine sound) included in the pseudo engine sound as the negative driving degree NEG becomes higher, thereby decreasing the audibility. Sound source data of the noise, the unpleasant sound, and the unnecessary sound are included in the basic sound source data 200.

As yet another example, the engine sound generation unit 130 may increase "muffled sound" of the pseudo engine sound as the negative driving degree NEG becomes higher, thereby decreasing the audibility. A DSP (Digital Signal Processor) may be used for adjusting the "muffled sound" of the pseudo engine sound. As yet another example, the engine sound generation unit 130 may decrease the sound pressure of the pseudo engine sound as the negative driving degree NEG becomes higher, thereby decreasing the audibility. As yet another example, the engine sound generation unit 130 may decrease the sound quality of the pseudo engine sound as the negative driving degree NEG becomes higher, thereby decreasing the audibility. The sound quality is determined by a frequency characteristic, a distortion rate, a signal-to-noise ratio, a dynamic range, and the like.

When generalized, the engine sound generation unit 130 changes at least one of a tone, a sound quality, a sound pressure, and a sound range of the pseudo engine sound in accordance with the negative driving degree NEG. A DSP may be used for adjusting the tone, the sound quality, the sound pressure, and the sound range.

As yet another example, when the negative driving degree NEG exceeds a predetermined threshold, the engine sound generation unit 130 may mute the pseudo engine sound. In other words, the engine sound generation unit 130 may stop generating and outputting the pseudo engine sound. This also serves as a penalty to a driver who has enjoyed the pseudo engine sound. Therefore, this also serves as an incentive to suppress the dangerous driving.

As yet another example, when the negative driving degree NEG exceeds a predetermined threshold, the engine sound generation unit 130 may suddenly increase the sound pressure of the pseudo engine sound. This makes it easier for the driver to notice the dangerous driving.

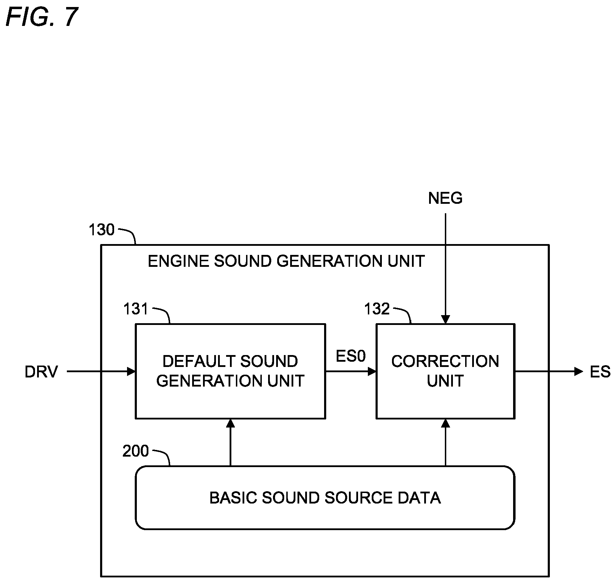

FIG. 7 is a block diagram showing an example of a functional configuration of the engine sound generation unit 130. In the example shown in FIG. 7, the engine sound generation unit 130 includes a default sound generation unit 131 and a correction unit 132. The default sound generation unit 131 generates a default pseudo engine sound ES0 based on the driving state information DRV and the basic sound source data 200. The default pseudo engine sound ES0 is a normal pseudo engine sound when the negative driving degree NEG is not taken into consideration. The correction unit 132 receives the default pseudo engine sound ES0 and the negative driving degree NEG. Then, the correction unit 132 corrects the default pseudo engine sound ES0 in accordance with the negative driving degree NEG to generate the pseudo engine sound that reflects the negative driving degree NEG. For example, the correction unit 132 generates the pseudo engine sound by decreasing the audibility of the default engine false sound ES0 as the negative driving degree NEG becomes higher. The correction unit 132 may include the DSP.

As shown in FIG. 5, the vehicle management system 100 may include a user interface 160. The user interface 160 includes an input device and an output device. Examples of the input device include a touch panel, a button, a switch, a keyboard, a microphone, and the like. Examples of the output device include a touch panel, a display, a speaker, and the like. When the current driving state is the dangerous driving, the vehicle management system 100 may notify the user (driver), via the user interface 160, that the dangerous driving is being performed. For example, when the negative driving degree NEG is equal to or higher than a threshold value, the vehicle management system 100 may notify the user (driver), via the user interface 160, that the dangerous driving is being performed. For example, the vehicle management system 100 displays, on the display device, visual information indicating that the dangerous driving is being performed. As another example, the vehicle management system 100 may output, from the speaker, audio information indicating that the dangerous driving is being performed.

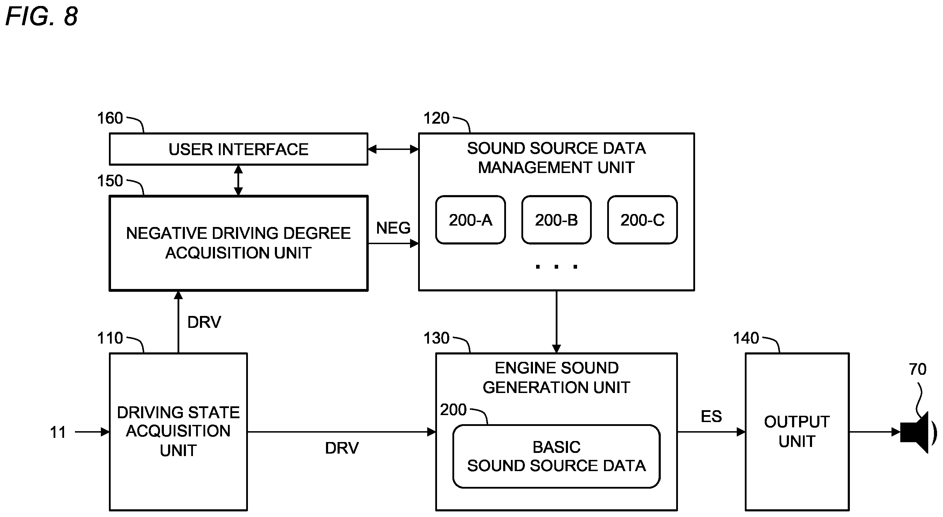

FIG. 8 is a block diagram showing another example of the functional configuration of the vehicle management system 100. Descriptions overlapping with the example shown in FIG. 5 will be omitted as appropriate. In the example shown in FIG. 8, the negative driving degree acquisition unit 150 outputs the negative driving degree NEG to the sound source data managing unit 120. The sound source data management unit 120 changes types of available basic sound source data 200 in accordance with the negative driving degree NEG. The available basic sound source data 200 are provided by, for example, a management server. A change in the types of the available basic sound source data 200 is equivalent to a change in choices of the available pseudo engine sound.

For example, the sound source data management unit 120 decreases the types of the available basic sound source data 200 as the negative driving degree NEG becomes higher. In other words, the sound source data management unit 120 decreases the choices of the pseudo engine sound as the negative driving degree NEG becomes higher. When the choices of the pseudo engine sound are changed in accordance with the negative driving degree NEG, the choices of the pseudo engine sound may be changed from default choices. Here, the default choices are normal choices when the negative driving degree NEG is not taken into consideration.

The user (driver) of the electric vehicle 10 is able to specify a desired one of the plurality of types of basic sound source data 200 via the user interface 160. The engine sound generation unit 130 generates the pseudo engine sound by using the basic sound source data 200 specified by the user. That is, the user of the electric vehicle 10 is able to specify a desired one of the choices of the pseudo engine sound via the user interface 160.

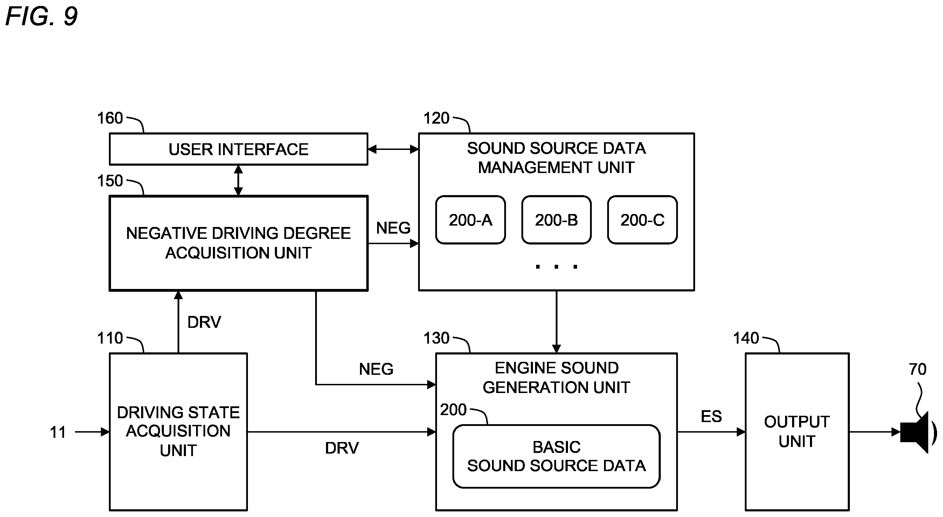

FIG. 9 is a block diagram showing yet another example of the functional configuration of the vehicle management system 100. The example shown in FIG. 9 is a combination of FIG. 5 and FIG. 8. That is, both the pseudo engine sound and the choices of the pseudo engine sound are changed in accordance with the negative driving degree NEG.

It should be noted that the sound in the present disclosure is not limited to the pseudo engine sound, as described above. The present disclosure is equally applicable to other sounds different from the pseudo engine sound.

### 2-4. Effects

As described above, according to the present embodiment, the sound is output through the speaker 70 mounted on the electric vehicle 10. The sound is changed and/or the choices of the sound are changed in accordance with the negative driving degree NEG that indicates the degree of the dangerous driving of the electric vehicle 10. Due to such the change in the sound and/or the change in the choices of the sound, a driver is able to be aware of his or her dangerous driving. As a result, the driver refrains from the dangerous driving, and thus the dangerous driving is suppressed. The suppression of the dangerous driving is also preferable for the safety and the traffic flow.

As the negative driving degree NEG becomes higher, the audibility of the sound may be decreased. As the negative driving degree NEG becomes higher, the noise component or the unnecessary sound component included in the sound may be increased. As the negative driving degree NEG becomes higher, the "muffled sound" of the sound may be increased. As the negative driving degree NEG becomes higher, the sound quality of the sound may be decreased. When the negative driving degree NEG exceeds the threshold, the sound may be muted. These serve as strong incentives to avoid the dangerous driving for the driver who wants to enjoy the sound. As a result, the dangerous driving is further suppressed.

As the negative driving degree NEG becomes higher, the choices of the sound may be decreased. This also serves as a strong incentive to avoid the dangerous driving for the driver who wants to enjoy the sound. As a result, the dangerous driving is further suppressed.

### 3. VARIOUS OPERATION EMBODIMENTS

Various operation embodiments of the vehicle management system 100 according to the present embodiment will be described below.

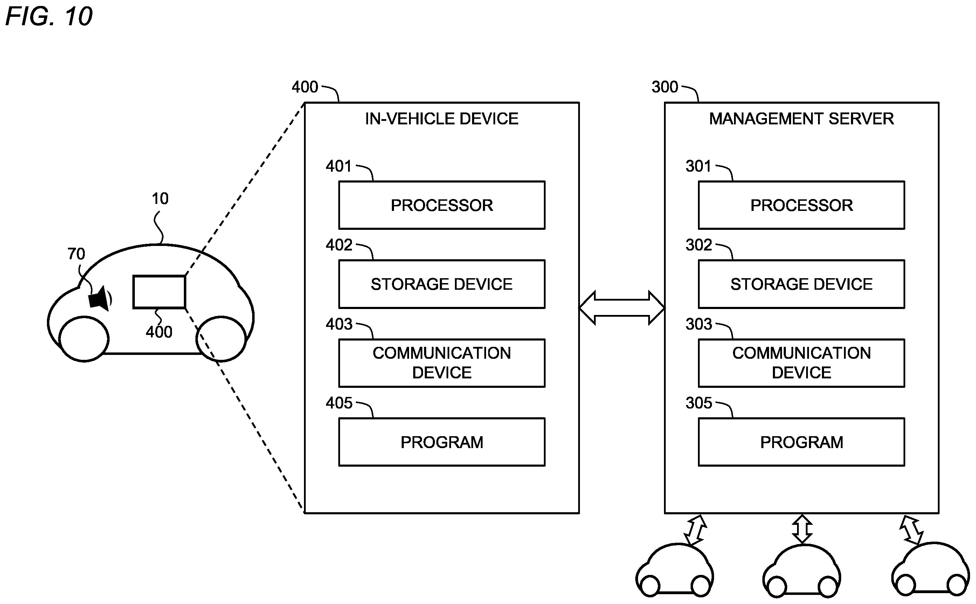

FIG. 10 is a block diagram for explaining an in-vehicle device 400 and a management server 300 that constitute the vehicle management system 100. The in-vehicle device 400 and the management server 300 can communicate with each other via a communication network.

The in-vehicle device 400 is mounted on the electric vehicle 10. The in-vehicle device 400 includes one or more processors 401 (hereinafter simply referred to as a processor 401), one or more storage devices 402 (hereinafter simply referred to as a storage device 402), and a communication device 403. The processor 401 executes a variety of processing. Examples of the processor 401 include a general-purpose processor, a special-purpose processor, a CPU, a GPU, an ASIC, an FPGA, an integrated circuit, a conventional circuit, and/or a combination thereof. The processor 401 may also be referred to as circuitry or processing circuitry. The storage device 402 stores a variety of information. Examples of the storage device 402 include a volatile memory, a non-volatile memory, an HDD, an SSD, and the like. The communication device 403 communicates with the management server 300. The functions of the in-vehicle device 400 are realized by a cooperation of the processor 401 and the storage device 402. A program 405 is a computer program executed by the processor 401. The functions of the in-vehicle device 400 may be realized by a cooperation of the processor 401 executing the program 405 and the storage device 402. The program 405 is stored in the storage device 402. Alternatively, the program 405 may be recorded on a non-transitory computer-readable recording medium.

The management server 300 includes one or more processors 301 (hereinafter simply referred to as a processor 301 ), one or more storage devices 302 (hereinafter simply referred to as a storage device 302 ), and a communication device 303. The processor 301 executes a variety of processing. Examples of the processor 301 include a general-purpose processor, a special-purpose processor, a CPU, a GPU, an ASIC, an FPGA, an integrated circuit, a conventional circuit, and/or a combination thereof. The processor 301 may also be referred to as circuitry or processing circuitry. The storage device 302 stores a variety of information. Examples of the storage device 302 include a volatile memory, a non-volatile memory, an HDD, an SSD, and the like. The communication device 303 communicates with the in-vehicle devices 400 of a large number of electric vehicles 10. The functions of the management server 300 is realized by a cooperation of the processor 301 and the storage device 302. A program 305 is a computer program executed by the processor 301. The functions of the management server 300 may be realized by a cooperation of the processor 301 executing the program 305 and the storage device 302. The program 305 is stored in the storage device 302. Alternatively, the program 305 may be recorded on a non-transitory computer-readable recording medium.

Any one of the processor 401 of the in-vehicle device 400 and the processor 301 of the management server 300, or a combination thereof, corresponds to the one or more processors 101 shown in FIG. 1. Any one of the storage device 402 of the in-vehicle device 400 and the storage device 302 of the management server 300, or a combination thereof, corresponds to the one or more storage devices 102 shown in FIG. 1. Any one of the program 405 of the in-vehicle device 400 and the program 305 of the management server 300, or a combination of these, corresponds to the vehicle management program 105 shown in FIG. 1.

### 3-1. First Example

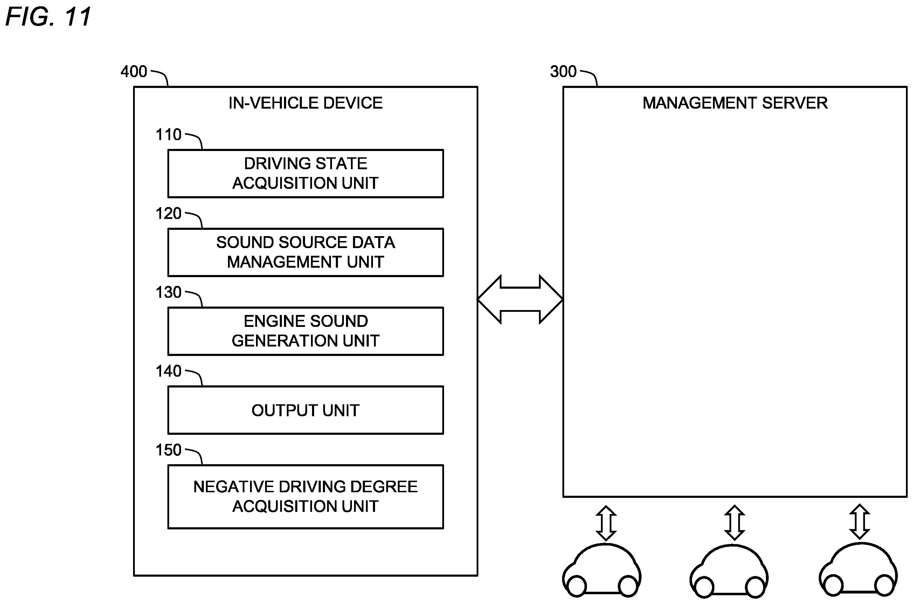

FIG. 11 is a block diagram for explaining a first example of the operation embodiment of the vehicle management system 100. In the first example, all of the driving state acquisition unit 110, the sound source data management unit 120, the engine sound generation unit 130, the output unit 140, and the negative driving degree acquisition unit 150 are included in the in-vehicle device 400. The management of the pseudo engine sound is carried out in the electric vehicle 10.

### 3-2. Second Example

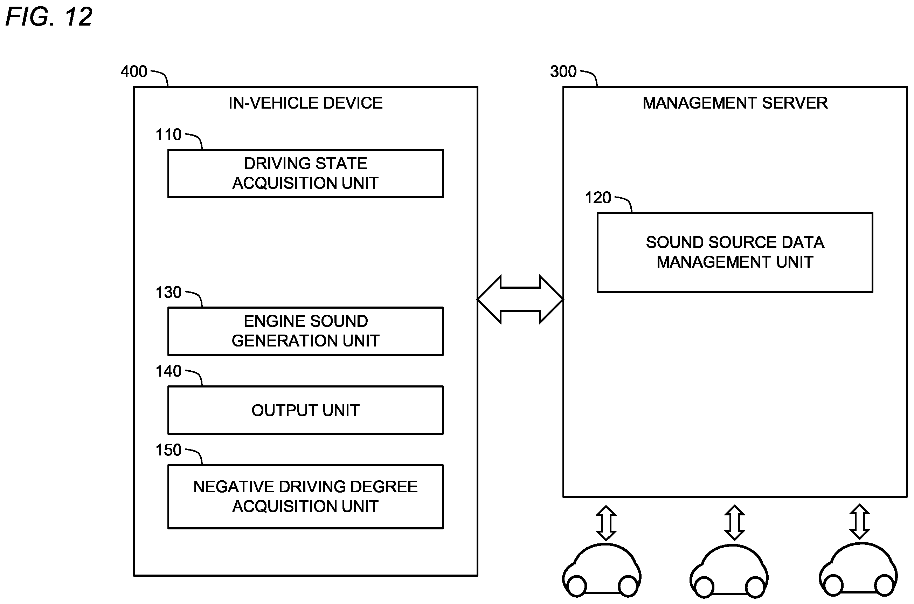

FIG. 12 is a block diagram for explaining a second example of the operation embodiment of the vehicle management system 100. In the second example, the sound source data management unit 120 is included in the management server 300, as compared with the first example described above. The sound source data management unit 120 collectively manages the basic sound source data 200 used in a plurality of electric vehicles 10. For this purpose, the basic sound source data 200 is associated with a vehicle ID. The sound source data management unit 120 manages the available basic sound source data 200 for each vehicle ID.

The engine sound generation unit 130 of the in-vehicle device 400 downloads the available basic sound source data 200 associated with the vehicle ID from the sound source data managing unit 120 of the management server 300.

The negative driving degree acquisition unit 150 of the in-vehicle device 400 may upload a set of the vehicle ID and the negative driving degree NEG to the management server 300. A frequency of the upload is arbitrary. The sound source data management unit 120 of the management server 300 changes the types of the available basic sound source data 200 associated with the vehicle ID based on the received negative driving degree NEG. For example, the sound source data management unit 120 decreases the types of the available basic sound source data 200 as the negative driving degree NEG becomes higher. The engine sound generation unit 130 of the in-vehicle device 400 downloads the available basic sound source data 200 associated with the vehicle ID from the sound source data managing unit 120 of the management server 300.

According to the second example, as described above, the basic sound source data 200 used in a plurality of electric vehicles 10 are collectively managed by the management server 300. This is advantageous from the viewpoint of management of the basic sound source data 200.

### 3-3. Third Example

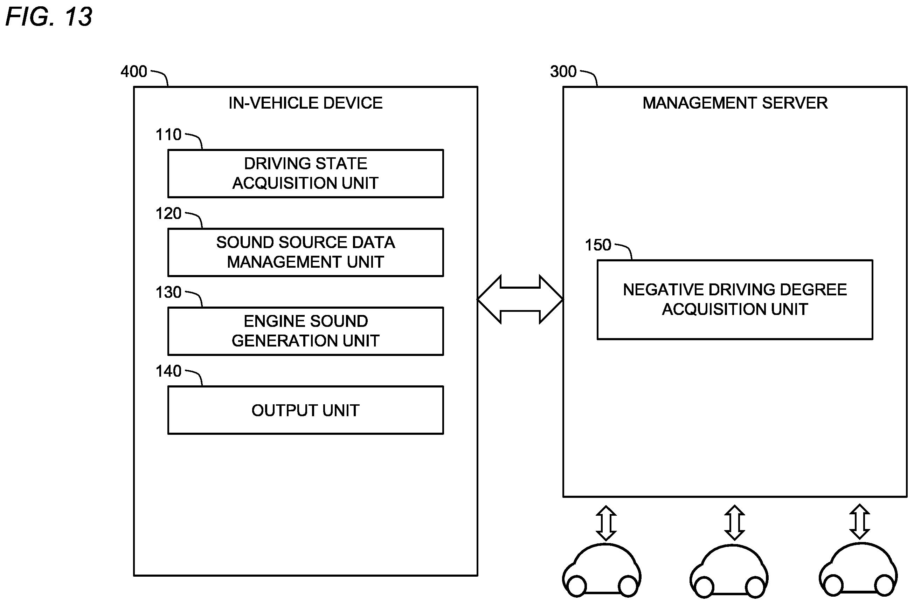

FIG. 13 is a block diagram for explaining a third example of the operation embodiment of the vehicle management system 100. In the third example, the negative driving degree acquisition unit 150 is included in the management server 300, as compared with the first example described above. The negative driving degree acquisition unit 150 collectively manages the negative driving degrees NEG regarding a plurality of electric vehicles 10. For this purpose, the negative driving degree NEG is associated with a vehicle ID. The negative driving degree acquisition unit 150 manages the negative driving degree NEG for each vehicle ID.

The in-vehicle device 400 uploads a set of the vehicle ID and the driving state information DRV to the management server 300. A frequency of the upload is arbitrary. The negative driving degree acquisition unit 150 of the management server 300 acquires the negative driving degree NEG associated with the vehicle ID based on the received driving state information DRV. Then, the negative driving degree acquisition unit 150 transmits the negative driving degree NEG to the electric vehicle 10 of the vehicle ID. The in-vehicle device 400 of the electric vehicle 10 of the vehicle ID performs the sound management based on the received negative driving degree NEG.

According to the third example, the in-vehicle device 400 does not need to include the negative driving degree acquisition unit 150. Therefore, it is possible to save a storage capacity of the in-vehicle device 400. Moreover, it is possible to reduce processing load on the in-vehicle device 400. Furthermore, it is not necessary to update an algorithm of the negative driving degree acquisition unit 150 for each of many electric vehicles 10, but rather it can be achieved collectively and easily.

### 3-4. Fourth Example

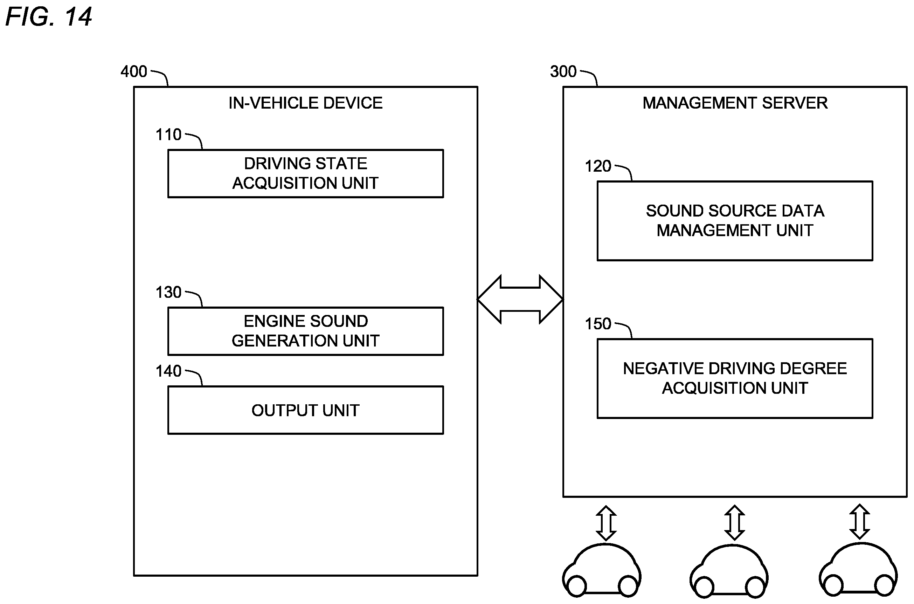

FIG. 14 is a block diagram for explaining a fourth example of the operation embodiment of the vehicle management system 100. In the fourth example, the sound source data managing unit 120 and the negative driving degree acquiring unit 150 are included in the management server 300, as compared with the first example described above. That is, the fourth example is a combination of the second example and the third example described above.

### 4. APPLICATION TO ELECTRIC VEHICLE HAVING MANUAL TRANSMISSION (MT) MODE

An electric motor used as a power unit for running in a general electric vehicle have torque characteristics that are significantly different from those of an internal combustion engine that has been used as a power unit for running in a conventional vehicle (CV). Due to the difference in the torque characteristics of the power unit, the CV requires a transmission, whereas the electric vehicle generally do not have a transmission. Of course, a typical electric vehicle does not have a manual transmission (MT) for changing a gear ratio in response to a driver's manual operation. For this reason, there is a big difference in a driving feeling between driving a conventional vehicle having a manual transmission (hereinafter referred to as an MT vehicle) and driving an electric vehicle.

Meanwhile, in the case of the electric motor, it is possible to control the torque relatively easily by controlling an applied voltage and a field system. Therefore, in the case of the electric motor, implementing appropriate control makes it possible to acquire desired torque characteristics within an operating range of the electric motor. By taking advantage of this feature, it is possible to control the torque of the electric vehicle to imitate the torque characteristics specific to the MT vehicle. In addition, the electric vehicle can be equipped with a pseudo shifter so that the driver can get the same driving feeling as in the MT vehicle. These make it possible to imitate the MT vehicle in the

### electric vehicle.

That is, the electric vehicle controls an output of the electric motor so as to imitate driving characteristics (torque characteristics) specific to the MT vehicle. The driver operates the pseudo shifter to perform a pseudo manual gearshift operation. In response to the pseudo manual gearshift operation performed by the driver, the electric vehicle changes its driving characteristics (torque characteristics) to imitate the MT vehicle. This allows the driver of the electric vehicle to feel as if he or she is driving the MT vehicle. Such a mode of controlling the electric motor for imitating the driving characteristics of the MT vehicle and the manual gearshift operation is hereinafter referred to as a "manual mode" or an "MT mode."

The electric vehicle 10 according to the present disclosure may be provided with such the manual mode (MT mode). In the MT mode, the electric vehicle 10 generates the pseudo engine sound in accordance with the driver's driving operation, and outputs the pseudo engine sound through the speaker 70. Not only the driving operation of the MT vehicle but also the engine sound of the MT vehicle are reproduced, which can increase the satisfaction of the driver who seeks realism.

Hereinafter, examples of a configuration of the electric vehicle 10 having the manual mode (MT mode) will be described.

### 4-1. First Configuration Example (Sequential Shifter)

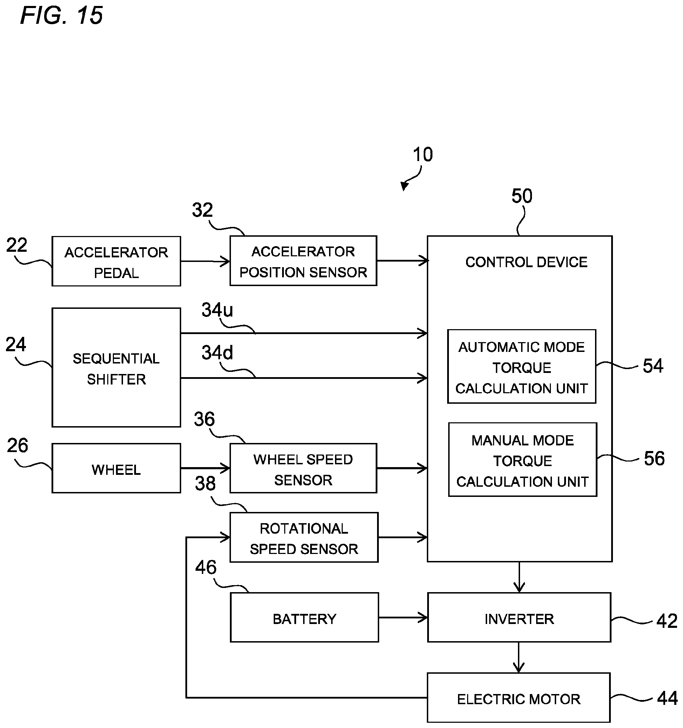

FIG. 15 is a block diagram showing a first example of the configuration of a power control system of the electric vehicle 10 according to the present embodiment. The electric vehicle 10 is provided with an electric motor 44, a battery 46, and an inverter 42. The electric motor 44 is a power unit for running. The battery 46 stores electrical energy to drive the electric motor 44. That is, the electric vehicle 10 is a battery electric vehicle (BEV) that runs based on the electric energy stored in the battery 46. The inverter 42 converts DC power input from the battery 46 during acceleration into drive power for the electric motor 44. The inverter 42 also converts regenerative power input from the electric motor 44 during deceleration into DC power and charges the battery 46.

The electric vehicle 10 is provided with an accelerator pedal 22 that is used by the driver to input an acceleration request to the electric vehicle 10. The accelerator pedal 22 is provided with an accelerator position sensor 32 for detecting an accelerator opening.

The electric vehicle 10 is provided with a sequential shifter 24. The sequential shifter 24 may be a paddle-type shifter or may be a lever-type pseudo shifter.

The paddle shifter is a dummy that is different from an actual paddle shifter. The paddle shifter has a structure similar to that of a paddle shifter provided in a clutch pedal-less MT vehicle. The paddle shifter is mounted on a steering wheel. The paddle shifter has an upshift switch and a downshift switch that determine an operating position. The upshift switch generates an upshift signal 34u when pulled towards the driver, and the downshift switch generates a downshift signal 34d when pulled towards the driver.

On the other hand, the lever-type pseudo shifter is a dummy that is different from an actual shifter, as in the case of the paddle-type shifter. The lever-type pseudo shifter has a structure similar to that of a lever-type shifter provided in a clutch pedal-less MT vehicle. The lever-type pseudo shifter is configured to output an upshift signal 34u when a shift lever is tilted forward, and to output a downshift signal 34d when the shift lever is tilted backward.

A wheel 26 of the electric vehicle 10 is provided with a wheel speed sensor 36. The wheel speed sensor 36 is used as a vehicle speed sensor for detecting a vehicle speed of the electric vehicle 10. In addition, the electric motor 44 is provided with a rotational speed sensor 38 for detecting a rotation speed thereof.

The electric vehicle 10 is provided with a control device 50. The control device 50 is typically an electronic control unit (ECU) mounted on the electric vehicle 10. The control device 50 may be a combination of multiple ECUs. The control device 50 includes an interface, a memory, and a processor. The interface is connected to the in-vehicle network. The memory includes a RAM for temporarily storing data and a ROM for storing programs executable by the processor and a variety of data related to the programs. The program is composed of a plurality of instructions. The processor reads the program and data from the memory, executes the program, and generates a control signal based on the signals acquired from each sensor.

For example, the control device 50 controls the electric motor 44 by PWM control of the inverter 42. The control device 50 receives signals from the accelerator position sensor 32, the sequential shifter 24 (the upshift switch and the downshift switch when the sequential shifter 24 is the paddle shifter), the wheel speed sensor 36, and the rotational speed sensor 38. The control device 50 processes these signals and calculates a motor torque command value for the PWM control of the inverter 42.

The control device 50 has control modes including an automatic mode (EV mode) and the manual mode (MT mode). The automatic mode is a normal control mode for driving the electric vehicle 10 as a general electric vehicle. The automatic mode is programmed to continuously change the output of the electric motor 44 in accordance with an operation of the accelerator pedal 22. On the other hand, the manual mode is a control mode for driving the electric vehicle 10 like the MT vehicle. The manual mode is programmed to change the output characteristics of the electric motor 44 for an operation of the accelerator pedal 22 in accordance with the upshift operation and the downshift operation of the sequential shifter 24. In other words, the manual mode is a control mode that can change the output of the electric motor 44 in response to a driving operation of a vehicle component other than the accelerator pedal 22 and the brake pedal. It is possible to switch between the automatic mode (EV mode) and the manual mode (MT mode).

The control device 50 includes an automatic mode torque calculation unit 54 and a manual mode torque calculation unit 56. Each of the units 54 and 56 may be an independent ECU, or may be an ECU function that is achieved by the processor executing the program recorded in the memory.

The automatic mode torque calculation unit 54 has a function of calculating a motor torque when controlling the electric motor 44 in the automatic mode. The automatic mode torque calculation unit 54 stores a motor torque command map. The motor torque command map is a map for determining the motor torque from the accelerator opening and the rotational speed of the electric motor 44. The signal from the accelerator position sensor 32 and the signal from the rotational speed sensor 38 are input to each parameter of the motor torque command map. The motor torque command map outputs the motor torque corresponding to these signals. Therefore, in the automatic mode, even if the driver operates the sequential shifter 24, the operation is not reflected in the motor torque.

The manual mode torque calculation unit 56 includes is provided with an MT vehicle model. The MT vehicle model is a model for calculating a drive wheel torque that is supposed to be obtained in response to the operations of the accelerator pedal 22 and the sequential shifter 24, assuming that the electric vehicle 10 is the MT vehicle.

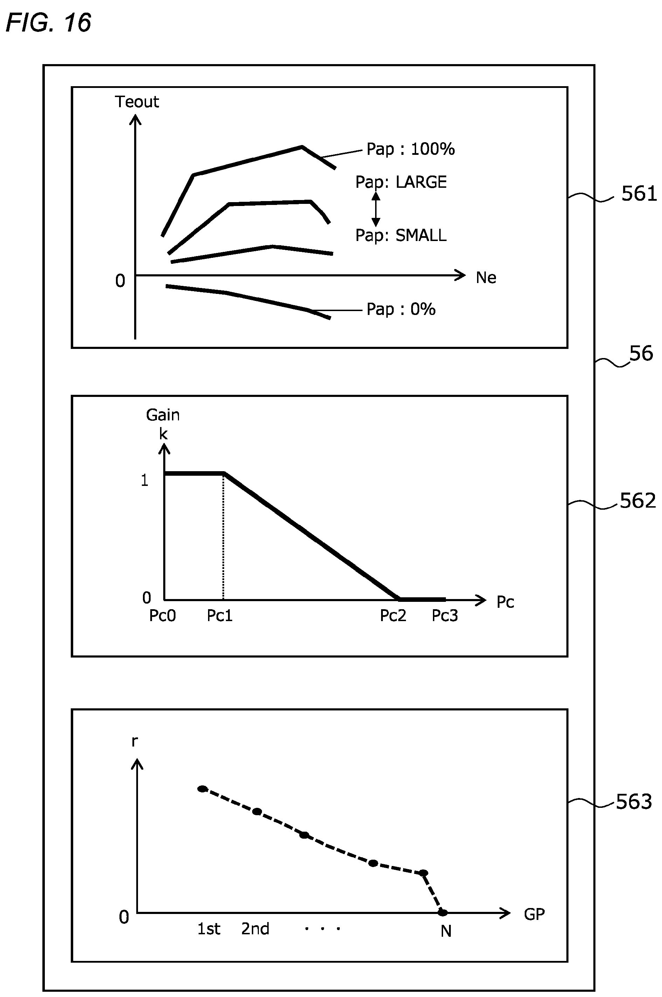

The MT vehicle model provided in the manual mode torque calculation unit 56 will be described with reference to FIG. 16. As shown in FIG. 16, the MT vehicle model includes an engine model 561, a clutch model 562, and a transmission model 563. It should be noted that an engine, a clutch, and a transmission that are virtually realized by the MT vehicle model are referred to as a virtual engine, a virtual clutch, and a virtual transmission, respectively. In the engine model 561, the virtual engine is modeled. In the clutch model 562, the virtual clutch is modeled. In the transmission model 563, the virtual transmission is modeled.

The engine model 561 calculates a virtual engine rotation speed Ne and a virtual engine output torque Teout. The virtual engine rotation speed Ne is calculated based on a wheel rotation speed Nw, an overall reduction ratio R, and a slip ratio Rslip of the virtual clutch. For example, the virtual engine rotation speed Ne is expressed by the following equation (1). $Ne = Nw \times R / \left(1-Rslip\right)$

The virtual engine output torque Teout is calculated from the virtual engine rotation speed Ne and an accelerator opening Pap. As shown in FIG. 16, a map that defines a relationship between the accelerator opening Pap, the virtual engine rotation speed Ne, and the virtual engine output torque Teout is used for calculating the virtual engine output torque Teout. According to the map, the virtual engine output torque Teout associated with the virtual engine rotation speed Ne is given for each accelerator opening Pap. The torque characteristics shown in FIG. 16 can be set to characteristics assuming a gasoline engine, or can be set to characteristics assuming a diesel engine. Furthermore, the torque characteristics can be set to characteristics assuming a naturally aspirated engine, or characteristics assuming a supercharged engine.

The clutch model 562 calculates a torque transmission gain k. The torque transmission gain k is a gain for calculating a degree of torque transmission of the virtual clutch according to a virtual clutch opening degree Pc. The virtual clutch opening degree Pc is normally 0%, and is temporarily opened to 100% in conjunction with switching of a virtual gear position of the virtual transmission. The clutch model 562 has a map as shown in FIG. 16. According to the map, the torque transmission gain k is given with respect to the virtual clutch opening degree Pc. In FIG. 16, Pc0 corresponds to a position where the virtual clutch opening degree Pc is 0%, and Pc3 corresponds to a position where the virtual clutch opening degree Pc is 100%. A range from Pc0 to Pc1 and a range from Pc2 to Pc3 are dead zones in which the torque transmission gain k does not change depending on the virtual clutch opening degree Pc. The clutch model 562 calculates a clutch output torque Tcout by using the torque transmission gain k. The clutch output torque Tcout is a torque output from the virtual clutch. For example, the clutch output torque Tcout is given by a product of the virtual engine output torque Teout and the torque transmission gain k (Tcout = Teout × k).

In addition, the clutch model 562 calculates the slip ratio Rslip. The slip ratio Rslip is used in the calculation of the virtual engine rotation speed Ne in the engine model 561. In order to calculate the slip ratio Rslip, a map that gives the slip ratio Rslip with respect to the virtual clutch opening degree Pc can be used, as in the case of the torque transmission gain k.

The transmission model 563 calculates a gear ratio (transmission gear ratio) r. The gear ratio r is determined by a virtual gear position GP in the virtual transmission. The virtual gear position GP is increased by one stage in response to the upshift operation of the sequential shifter 24. On the other hand, the virtual gear position GP is decreased by one stage in response to the downshift operation of the sequential shifter 24. The transmission model 563 has a map as shown in FIG. 16. According to the map, the gear ratio r is given with respect to the virtual gear position GP such that the gear ratio r decreases as the virtual gear position GP increases. The transmission model 563 calculates a transmission output torque Tgout by using the gear ratio r obtained from the map and the clutch output torque Tcout. For example, the transmission output torque Tgout is given by a product of the clutch output torque Tcout and the gear ratio r (Tgout = Tcout × r). The transmission output torque Tgout changes discontinuously in response to the change in the gear ratio r. Such the discontinuous change in the transmission output torque Tgout generates a gear shift shock, which can create a feeling like a vehicle equipped with a stepped transmission.

The MT vehicle model calculates a drive wheel torque Tw by using a predetermined reduction ratio rr. The reduction ratio rr is a fixed value determined by a mechanical structure from the virtual transmission to the drive wheel. A value obtained by multiplying the reduction ratio rr by the gear ratio r is the overall reduction ratio R mentioned above. The MT vehicle model calculates the drive wheel torque Tw from the transmission output torque Tgout and the reduction ratio rr. For example, the drive wheel torque Tw is given by a product of the transmission output torque Tgout and the reduction ratio rr (Tw = Tgout × rr).

The control device 50 converts the drive wheel torque Tw calculated by the MT vehicle model into a required motor torque Tm. The required motor torque Tm is a motor torque required to achieve the drive wheel torque Tw calculated by the MT vehicle model. A reduction ratio from an output shaft of the electric motor 44 to the drive wheel is used to convert the drive wheel torque Tw into the required motor torque Tm. The control device 50 then controls the inverter 42 in accordance with the required motor torque Tm to control the electric motor 44.

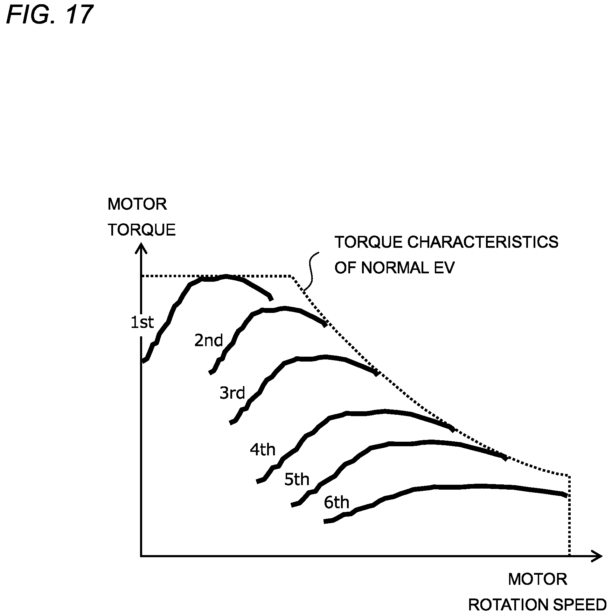

FIG. 17 is a diagram showing the torque characteristics of the electric motor 44 achieved by the motor control using the MT vehicle model, compared to the torque characteristics of the electric motor 44 achieved by normal motor control in an electric vehicle (EV). According to the motor control using the MT vehicle model, as shown in FIG. 17, it is possible to achieve such the torque characteristics that imitate the torque characteristics of the MT vehicle in accordance with the virtual gear position set by the sequential shifter 24 (indicated by solid lines in the figure). It should be noted that in FIG. 17, the number of gear positions is six.

### 4-2. Second Configuration Example

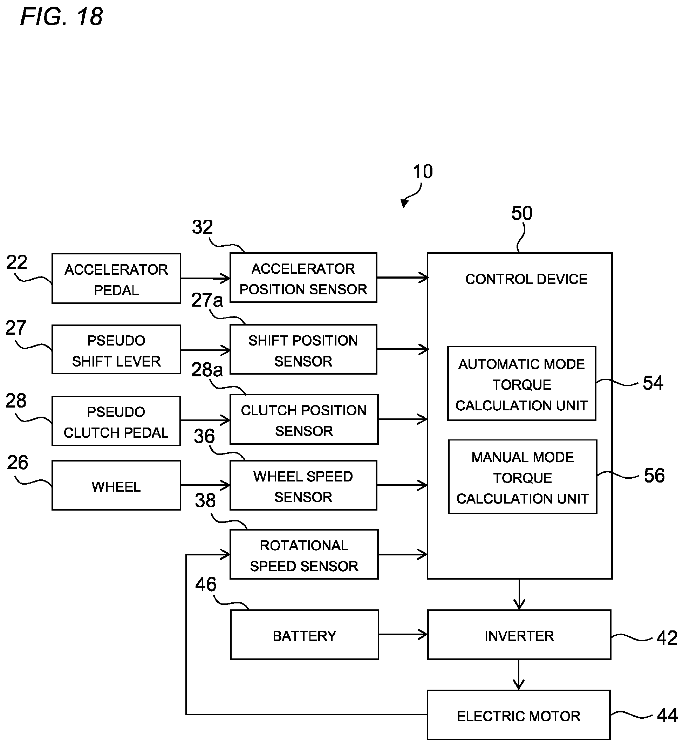

FIG. 18 is a block diagram showing a second configuration example of the power control system of the electric vehicle 10 according to the present embodiment. Here, only the configurations that differ from the first configuration example described above will be explained. More specifically, in the second configuration example, the electric vehicle 10 is provided with a pseudo shift lever (pseudo shift device) 27 and a pseudo clutch pedal 28 instead of the sequential shifter 24 provided in the first configuration example. The pseudo shift lever 27 and the pseudo clutch pedal 28 are merely dummies that are different from an actual shift lever and an actual clutch pedal, respectively.

The pseudo shift lever 27 has a structure that imitates a shift lever provided in the MT vehicle. An arrangement and an operational feeling of the pseudo shift lever 27 are the same as those of an actual MT vehicle. The pseudo shift lever 27 has positions corresponding to respective gear positions including, for example, first, second, third, fourth, fifth, sixth, reverse, and neutral. The pseudo shift lever 27 is provided with a shift position sensor 27a for detecting the gear position by determining which position the pseudo shift lever 27 is in.

The pseudo clutch pedal 28 has a structure that imitates a clutch pedal provided in the MT vehicle. An arrangement and an operational feeling of the pseudo clutch pedal 28 are the same as those of an actual MT vehicle. The pseudo clutch pedal 28 is operated when the pseudo shift lever 27 is operated. That is, when the driver wants to change the gear position setting using the pseudo shift lever 27, the driver depresses the pseudo clutch pedal 28. After the change in the gear position setting is completed, the driver stops depressing and returns the pseudo clutch pedal 28 to its original position. The pseudo clutch pedal 28 is provided with a clutch position sensor 28a for detecting the amount of depression of the pseudo clutch pedal 28.

The control device 50 receives signals from the accelerator position sensor 32, the shift position sensor 27a, the clutch position sensor 28a, the wheel speed sensor 36, and the rotational speed sensor 38. The control device 50 processes these signals and calculates a motor torque command value for the PWM control of the inverter 42.

The control device 50 includes the automatic mode and the manual mode as control modes, as in the case of the first configuration example described above. The automatic mode is programmed to continuously change the output of the electric motor 44 in accordance with an operation of the accelerator pedal 22. On the other hand, the manual mode is a control mode for driving the electric vehicle 10 like the MT vehicle. The manual mode is programmed to change the output and the output characteristics of the electric motor 44 for an operation of the accelerator pedal 22 in accordance with an operation of the pseudo clutch pedal 28 and an operation of the pseudo shift lever (pseudo shift device) 27. In other words, the manual mode is a control mode that can change the output of the electric motor 44 in response to a driving operation of a vehicle component other than the accelerator pedal 22 and the brake pedal.

The vehicle model provided in the manual mode torque calculation unit 56 is the same as that shown in FIG. 16. However, the virtual clutch opening degree Pc is replaced with the depression amount of the pseudo clutch pedal 28 detected by the clutch position sensor 28a. Also, the virtual gear position GP is determined by the position of the pseudo shift lever 27 detected by the shift position sensor 27a.

### 5. DRIVING CHARACTERISTIC MANAGEMENT CONSIDERING DANGEROUS DRIVING

The electric vehicle 10 according to the present embodiment may have an imitation mode that imitates a driving characteristic of a virtual vehicle.

For example, as described in the above Section 4, the electric vehicle 10 may have the manual mode (MT mode) that imitates a driving characteristic of an MT vehicle. In this case, the virtual vehicle is the MT vehicle. The imitation mode includes the manual mode (MT mode).

As another example, the electric vehicle 10 may have an EV mode that imitates a driving characteristic of an electric vehicle whose type is different from the electric vehicle 10. In this case, the virtual vehicle is the electric vehicle whose type is different from the electric vehicle 10

The vehicle management system 100 according to the present embodiment may change choices of the virtual vehicle in the imitation mode in accordance with the negative driving degree NEG. For example, the vehicle management system 100 decreases the choices of the virtual vehicle in the imitation mode as the negative driving degree NEG becomes higher.

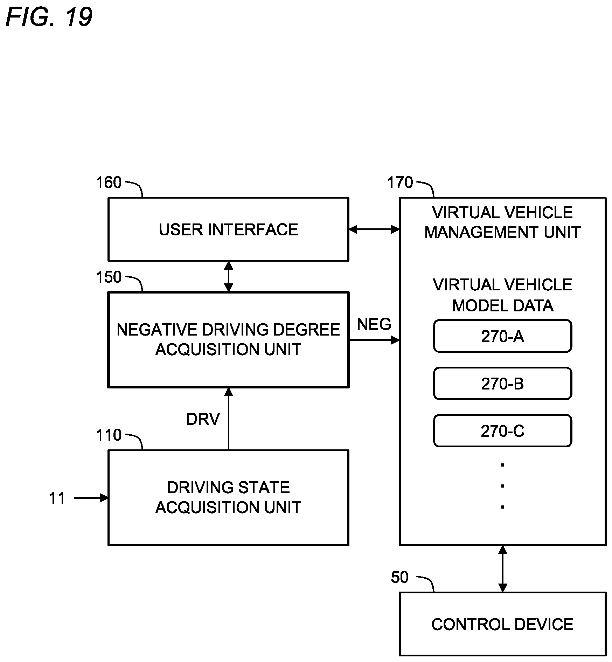

FIG. 19 is a block diagram showing yet another example of the functional configuration of the vehicle management system 100. The vehicle management system 100 includes, as functional blocks, the driving state acquisition unit 110, the negative driving degree acquisition unit 150, and a virtual vehicle management unit 170. These functional blocks may be realized, for example, by a cooperation of the processor 101 executing the vehicle management program 105 and the storage device 102.

The driving state acquisition unit 110, the negative driving degree acquisition unit 150, and the user interface 160 are the same as those in the above-described embodiment.

The virtual vehicle management unit 170 manages virtual vehicle model data 270 that indicates a model of the virtual vehicle being an imitation target in the imitation mode. For example, in the case of the manual mode (MT mode) that imitates the driving characteristic of the MT vehicle, the virtual vehicle model data 270 includes the MT vehicle model (i.e., the engine model 561, the clutch model 562, and the transmission model 563) as shown in FIG. 16. When the MT vehicle being the imitation target is different, the MT vehicle model, i.e., the virtual vehicle model data 270 also is different, and as a result, the driving characteristic (torque characteristic) shown in FIG. 17 also is different.

The negative driving degree acquisition unit 150 outputs the negative driving degree NEG to the virtual vehicle management unit 170. The virtual vehicle management unit 170 changes types of available virtual vehicle model data 270 in accordance with the negative driving degree NEG. The available virtual vehicle model data 270 are provided, for example, by the management server. A change in the types of the available virtual vehicle model data 270 is equivalent to a change in the choices of the virtual vehicle available in the imitation mode.

For example, the virtual vehicle management unit 170 decreases the types of the available virtual vehicle model data 270 as the negative driving degree NEG becomes higher. In other words, the virtual vehicle management unit 170 decreases the choices of the virtual vehicle available in the imitation mode as the negative driving degree NEG becomes higher. When the choices of the virtual vehicle is changed in accordance with the negative driving degree NEG, the choices of the virtual vehicle may be changed from default choices. The default choices are normal choices when the negative driving degree NEG is not taken into consideration.

The user (driver) of the electric vehicle 10 is able to specify a desired one of a plurality of types of virtual vehicle model data 270 via the user interface 160. The control device 50 imitates the driving characteristic of the virtual vehicle by using the virtual vehicle model data 270 specified by the user. That is, the user of the electric vehicle 10 is able to specify a desired one of the choices of the virtual vehicle via the user interface 160.

As described above, the electric vehicle 10 has the imitation mode that imitates the driving characteristic of the virtual vehicle. The choices of the virtual vehicle available in the imitation mode are changed in accordance with the negative driving degree NEG that indicates the degree of the dangerous driving of the electric vehicle 10. Due to such the change in the choices of the virtual vehicle, the driver is able to be aware of his or her dangerous driving. As a result, the driver refrains from the dangerous driving, and thus the dangerous driving is suppressed.

The choices of the virtual vehicle may be decreased as the negative driving degree NEG becomes higher. This serves as a strong incentive to avoid the dangerous driving for the driver who wants to enjoy the imitation mode. As a result, the dangerous driving is further suppressed.

It should be noted that the sound source data management unit 120 in FIGS. 11 to 14 described above is replaced with the virtual vehicle management unit 170.

### 6. COMBINATION

A combination of Sections 2 and Section 5 described above is also possible. That is, the vehicle management system 100 may perform both of the sound management described in Section 2 and the driving characteristic management described in Section 5 in consideration of the dangerous driving.

### [EXPLANATION OF REFERENCE SIGNS]

- 10: electric vehicle
- 11: sensor
- 44: electric motor
- 70: speaker
- 100: vehicle management system
- 110: driving state acquisition unit
- 120: sound source data management unit
- 130: engine sound generation unit
- 140: output unit
- 150: negative driving degree acquisition unit
- 160: user interface
- 170: virtual vehicle management unit
- 200: basic sound source data
- 270: virtual vehicle model data
- 300: management server
- 400: in-vehicle device
- DRV: driving state information
- ES: engine sound data
- NEG: negative driving degree

## Claims

1. A vehicle management system applied to an electric vehicle that uses an electric motor as a power unit for running,
the vehicle management system comprising one or more processors configured to generate sound and to output the sound through a speaker mounted on the electric vehicle, wherein
the one or more processors are further configured to:
acquire driving state information indicating a driving state of the electric vehicle;
acquire, based on the driving state information, a negative driving degree indicating a degree of dangerous driving of the electric vehicle; and
change the sound and/or change choices of the sound in accordance with the negative driving degree.

2. The vehicle management system according to claim 1, wherein
the one or more processors are configured to decrease audibility of the sound as the negative driving degree becomes higher.

3. The vehicle management system according to claim 1, wherein
the one or more processors are configured to increase a noise component or an unnecessary sound component included in the sound as the negative driving degree becomes higher.

4. The vehicle management system according to claim 1, wherein
the one or more processors are configured to mute the sound or increase a sound pressure of the sound when the negative driving degree exceeds a threshold.

5. The vehicle management system according to claim 1, wherein
the one or more processors are configured to change at least one of a tone, a sound quality, a sound pressure, and a sound range of the sound in accordance with the negative driving degree.

6. The vehicle management system according to claim 1, wherein
the one or more processors are configured to decrease the choices of the sound as the negative driving degree becomes higher.

7. The vehicle management system according to claim 1, wherein
the driving state of the electric vehicle includes at least one of presence or absence of overspeed, a speed, an acceleration, a deceleration, a steering speed, an inter-vehicle distance, a TTC (Time-To-Collision), a distance to a surrounding object, a frequency of lane changes, and a state of a lane change.

8. The vehicle management system according to claim 1, wherein
the sound is a pseudo engine sound.

9. The vehicle management system according to any one of claims 1 to 8, wherein
the electric vehicle has an imitation mode that imitates a driving characteristic of a virtual vehicle.

10. The vehicle management system according to claim 9, wherein
the one or more processors are further configured to change choices of the virtual vehicle available in the imitation mode in accordance with the negative driving degree.

11. The vehicle management system according to claim 9, wherein
the virtual vehicle is a manual transmission vehicle, and
the imitation mode includes a manual mode that imitates a driving characteristic of the manual transmission vehicle.

12. The vehicle management system according to claim 11, wherein
the electric vehicle is provided with an accelerator pedal and a sequential shifter, and
in the manual mode, the electric vehicle is configured to change an output characteristic of the electric motor for an operation of the accelerator pedal in accordance with a gearshift operation of the sequential shifter.

13. The vehicle management system according to claim 11, wherein
the electric vehicle is provided with an accelerator pedal, a pseudo clutch pedal, and a pseudo shift device,
the pseudo clutch pedal is operated when the pseudo shift device is operated, and
in the manual mode, the electric vehicle is configured to change an output of the electric motor for an operation of the accelerator pedal in accordance with an operation of the pseudo clutch pedal and an operation of the pseudo shift device.

14. An electric vehicle that uses an electric motor as a power unit for running,
the electric vehicle comprising one or more processors configured to generate sound and to output the sound through a speaker mounted on the electric vehicle, wherein
the one or more processors are further configured to:
acquire driving state information indicating a driving state of the electric vehicle;
acquire, based on the driving state information, a negative driving degree indicating a degree of dangerous driving of the electric vehicle; and
change the sound and/or change choices of the sound in accordance with the negative driving degree.

15. A vehicle management system applied to an electric vehicle that uses an electric motor as a power unit for running,
the electric vehicle having an imitation mode that imitates a driving characteristic of a virtual vehicle,
the vehicle management system comprising one or more processors, wherein
the one or more processors are configured to:
acquire driving state information indicating a driving state of the electric vehicle;
acquire, based on the driving state information, a negative driving degree indicating a degree of dangerous driving of the electric vehicle; and
change choices of the virtual vehicle available in the imitation mode in accordance with the negative driving degree.

16. The vehicle management system according to claim 15, wherein
the one or more processors are configured to decrease the choices of the virtual vehicle available in the imitation mode as the negative driving degree becomes higher.
